# EUROPÄISCHE PATENTSCHRIFT

(11) **EP 2 106 551 B1**
(45) Veröffentlichungstag und Bekanntmachung des Hinweises auf die Patenterteilung: **28.06.2017**
(21) Anmeldenummer: 07822570.3
(22) Anmeldetag: 14.11.2007
(51) Int. Cl.: G01P 15/08, G01P 15/18, G01P 15/125

(54) **MEHRACHSIGER MIKROMECHANISCHER BESCHLEUNIGUNGSSENSOR**
MULTI-AXIS MICROMECHANIC ACCELERATION SENSOR
CAPTEUR D'ACCÉLÉRATION MICROMÉCANIQUE À PLUSIEURS AXES

(30) Priorität: 27.12.2006 DE 102006062314
(43) Veröffentlichungstag der Anmeldung: 07.10.2009
(73) Patentinhaber: Robert Bosch GmbH, 70442 Stuttgart (DE)
(72) Erfinder: CLASSEN, Johannes, 72764 Reutlingen (DE); FRANKE, Axel, 71254 Ditzingen (DE); SCHUBERT, Dietrich, 72762 Reutlingen (DE); KEHR, Kersten, 08267 Zwota (DE); REICHENBACH, Ralf, 73732 Esslingen (DE)
(86) Internationale Anmeldenummer: PCT/EP2007/062307
(87) Internationale Veröffentlichungsnummer: WO 2008/080683

(56) Entgegenhaltungen:
- EP-A- 1 635 180
- WO-A-2006/033269
- FR-A- 2 885 410

## Beschreibung

Die Erfindung betrifft einen mikromechanischen Beschleunigungssensor zur Detektion von Beschleunigungen in mehreren Achsen. Derartige Beschleunigungssensoren können als Inertialsensoren in Sicherheitssystemen insbesondere von Kraftfahrzeugen zum Einsatz kommen.

### Stand der Technik

Mikromechanische Beschleunigungssensoren werden häufig als Masse-Feder-Systeme mit kapazitiver Auswertung der durch anliegende mechanische Kräfte oder Momente verursachten Auslenkungen einer seismischen Masse ausgeführt. Dazu sind Elektrodenpaare vorgesehen, die Elektroden umfassen, die entweder fest mit einem Substrat oder mit einer seismischen Masse verbunden sind und in der Regel Plattenkondensatoren bilden, deren Kapazität von der Auslenkung der seismischen Masse abhängt. Bei Sensorelementen, die Beschleunigungen parallel zu ihrer Substratebene messen, erfolgt die Aufhängung der seismischen Masse üblicherweise in der Ebene, in der auch der Schwerpunkt der seismischen Masse liegt, so dass die seismische Masse bei Auftreten einer Beschleunigung in dieser Ebene auch in dieser Ebene ausgelenkt wird.

Es ist bekannt, dass der Einfluss einer Stresseinkoppelung über das Substrat auf das Messsignal kleiner wird, wenn die Aufhängung der seismischen Masse bzw. die Aufhängungen mehrerer seismischer Massen und gegebenenfalls auch der festen mit dem Substrat verbundenen Elektroden dicht beieinander liegen. Eine derartige Zentralaufhängung von beweglichen Strukturen und festen Detektionselektroden, wie sie zur Verminderung der Stressempfindlichkeit des Sensors wünschenswert ist, führt bei herkömmlichen Sensorelementen, die parallel zur Substrat- oder Waferebene angreifende Beschleunigungen in Auslenkungen von seismischen Massen in der gleichen Ebene umsetzen, in aktuellen Prozessierungsverfahren topologiebedingt zu einer Verringerung der Detektionskapazitäten derart ausgelegter Sensoren.

Es ist bekannt, für Sensoren, die Beschleunigungen in mehreren Achsen detektieren sollen, für jede Achse ein gesondertes Masse-Feder-System vorzusehen, was mit einer entsprechenden Vergrößerung des Raumbedarfes solcher Sensoren verbunden ist. Das wirkt sich nachteilig auf den Chipflächenbedarf und damit auf die Herstellungskosten aus und stellt aufgrund der unvermeidlichen Vergrößerung der Bauteilgröße einen teilweise erheblichen Wettbewerbsnachteil dar.

Es ist des weiteren bekannt, mehrachsige Beschleunigungssensoren mit einer seismischen Masse auszuführen, die für die Messung von Beschleunigungen in mehreren Richtungen in Kombination mit einer relativ zentral angeordneten Aufhängung genutzt wird. Diese Systeme beruhen auf der Aufhängung der seismischen Masse mit Hilfe mehrerer sternförmig verlaufender Verbindungsbalken, die eine hängende Lagerung der seismischen Masse ermöglichen. Derartige Systeme sind jedoch bisher nur in aufwendigen Verfahren der Volumenmikromechanik herstellbar und daher entsprechend teuer. Solche Beschleunigungssensoren sind aus EP 1 635 180, WO 2006/033269, FR 2 885 410 und US 5 492 020 bekannt.

### Offenbarung der Erfindung

### Technische Aufgabe

Die Erfindung hat die Aufgabe, einen mikromechanischen Beschleunigungssensor bereitzustellen, der sich durch einen gegenüber volumenmikromechanischen Verfahren geringeren Herstellungsaufwand auszeichnet und eine Detektion von Beschleunigungen in mehreren Achsen bei geringem Platzbedarf und geringer Stressempfindlichkeit bezüglich Störeinkopplungen über das Substrat ermöglicht.

### Technische Lösung

Gelöst wird die Aufgabe durch einen mikromechanischen Beschleunigungssensor mit den Merkmalen von Anspruch 1. Die abhängigen Ansprüche 2 bis 10 betreffen vorteilhafte Ausgestaltungen eines erfindungsgemäßen Beschleunigungssensors.

Die Erfindung besteht aus einem mikromechanischen Beschleunigungssensor, umfassend ein Substrat, eine parallel zur Substratebene verlaufende elastische Membran, die teilweise mit dem Substrat verbunden ist und einen Flächenbereich aufweist, der senkrecht zur Substratebene ausgelenkt werden kann, eine seismische Masse, deren Schwerpunkt außerhalb der Ebene der elastischen Membran liegt, wobei die seismische Masse substratseitig eine ebene Fläche aufweist, die sich über Substratbereiche erstreckt, die außerhalb des Bereiches der elastischen Membran liegen und eine Anordnung aus mehreren Elektroden aufweisen. Die ebene Fläche der seismischen Masse verläuft im Ruhezustand parallel zu dieser Anordnung aus mehreren Elektroden, die jeweils mit den gegenüberliegenden Bereichen der seismischen Masse schaltungstechnisch einen Kondensator bilden. Die seismische Masse ist in ihrem zentralen Bereich in dem Flächenbereich der elastischen Membran, der senkrecht zur Substratebene ausgelenkt werden kann, an der elastischen Membran befestigt. Der Abstand zwischen der seismischen Masse und den Elektroden ist so bemessen, dass eine funktionsgerechte Auslenkung der seismischen Masse möglich ist.

Die beabstandete Erstreckung der seismischen Masse vor mit Elektroden versehenen Substratbereichen ermöglicht eine Abstandsänderung zwischen den einzelnen Elektroden und den gegenüberliegenden Flächenbereichen der seismischen Masse, was zu entsprechenden Kapazitätsänderungen führt. Durch die Verlagerung des Schwerpunktes der seismischen Masse vor die elastische Membran, welche gleichzeitig die Position der Aufhängung der seismischen Masse vorgibt, erfolgt beim Auftreten von Beschleunigungen parallel zur Substratebene eine Auslenkung (Verkippung) der seismischen Masse aus der Substratebene oder parallelen Ebenen heraus. Durch die Befestigung der seismischen Masse an einer elastischen Membran lässt sich gleichzeitig eine Zentralaufhängung der seismischen Masse realisieren, ohne eine topologiebedingte Reduktion der Detektionskapazitäten in Kauf nehmen zu müssen. Ein derartiger erfindungsgemäßer Sensor zeichnet sich durch das Fehlen einer Vorzugsrichtung für die beschleunigungsinduzierte Verkippung der seismischen Masse aus. Er kann dadurch Beschleunigungen in zwei Raumrichtungen detektieren, wobei die seismische Masse, deren Aufhängung über eine elastische Membran und bei entsprechender Elektrodenkonfiguration auch die Messkondensatoren bildenden Elektroden für die Detektion in beiden Richtungen gemeinsam genutzt werden können. Bei parallel verlaufenden Elektroden auf dem Substrat und den entsprechenden gegenüberliegenden Flächenbereichen der seismischen Masse lässt sich ein geringer Grundabstand zwischen Substrat und seismischer Masse und damit eine hohe Detektionskapazität bei relativ niedrigem Flächenbedarf realisieren.

### Vorteilhafte Wirkungen

Die Zuordnung der einzelnen Kapazitätsänderungen während einer Verkippung der seismischen Masse zu entsprechenden Beschleunigungskomponenten erfolgt in einer Auswerteschaltung. Eine vorteilhafte und relativ einfache Auswertung wird ermöglicht, wenn die seismische Masse mindestens zwei zur Substratebene parallele Symmetrieachsen in den Detektionsrichtungen aufweist. Des weiteren ist es vorteilhaft, wenn die Überlappungsbereiche zwischen den Elektroden und den gegenüberliegenden Bereichen der seismischen Masse ebenfalls zwei zur Substratebene parallele Symmetrieachsen in den Detektionsrichtungen aufweisen.

Beides kann auf besonders vorteilhafte Weise realisiert werden, wenn die Elektroden radialsymmetrisch um den Befestigungsbereich der seismischen Masse auf dem Substrat angeordnet sind.

Ein besonders symmetrisches und leicht auszuwertendes Ansprechverhalten eines erfindungsgemäßen mikromechanischen Beschleunigungssensors ergibt sich, wenn der Flächenbereich der elastischen Membran, welcher senkrecht zur Substratebene auslenkbar ist, der Flächenbereich in dem die seismische Masse an der elastischen Membran befestigt ist, die seismische Masse selbst und die Elektrodenanordnung jeweils zwei Symmetrieachsen parallel zur Substratebene in den Detektionsrichtungen aufweisen, wobei die Schnittpunkte der Symmetrieachsen senkrecht zur Substratebene übereinander liegen. Besonders vorteilhaft ist auch hier wieder eine radialsymmetrische Ausgestaltung der jeweiligen Flächenbereiche.

Für die Detektion der zwei Beschleunigungskomponenten in Substratebene und eine einfache Auswertung ist es vorteilhaft, wenn vier Elektroden in erfindungsgemäßer Weise außerhalb der elastischen Membran auf dem Substrat angeordnet sind.

Dabei ist es sinnvoll, die vier Elektroden gleich groß auszulegen, wobei auch die Trennbereiche zwischen den einzelnen Elektroden radialsymmetrisch ausgestaltet werden.

In besonders vorteilhafter Weise umfasst die seismische Masse eine parallel zum Substrat verlaufende ebene Platte, deren Erstreckung bei geometrisch ähnlicher Auslegung der Elektroden auf dem Substrat die Empfindlichkeit und die Baugröße des Beschleunigungssensors wesentlich bestimmt.

Um übergroße Unterätzweiten zu vermeiden, ist es prozesstechnisch vorteilhaft, den mikromechanischen Beschleunigungssensor so auszulegen, dass die elastische Membran in einem zentralen Bereich mit dem Substrat verbunden ist und der Flächenbereich, in dem die elastische Membran senkrecht zur Substratebene auslenkbar ist, der Flächenbereich, in dem die seismische Masse an der elastischen Membran befestigt ist und die parallel zum Substrat verlaufende ebene Platte der seismischen Masse radialsymmetrisch um diesen zentralen Bereich, in dem die elastische Membran mit dem Substrat verbunden ist, angeordnet sind. In diesem Falle ist es vorteilhaft, wenn die seismische Masse in ihrem zentralen Bereich einen Trenchgraben aufweist, der zu einem perforiertem Bereich der elastischen Membran führt. Das Unterätzen der elastischen Membran zur Gewährleistung des erfindungsgemäß erforderlichen senkrecht zur Substratebene auslenkbaren Flächenbereiches der elastischen Membran erfolgt dann durch den Trenchgraben der seismischen Masse und den perforierten Membranbereich hindurch.

### Kurze Beschreibung der Zeichnungen

An einem Ausführungsbeispiel wird die Erfindung näher erläutert. Es zeigen:
- Fig.1: eine schematische Schnittdarstellung eines erfindungsgemäßen Beschleunigungssensors senkrecht zur Substratebene;
- Fig.2: eine Darstellung eines erfindungsgemäßen Beschleunigungssensors mit zentraler Befestigung der elastischen Membran als Schnittdarstellung und Draufsicht;
- Fig. 3a: eine Darstellung einer beispielhaften Beschaltung einer erfindungsgemäßen Elektrodenanordnung;
- Fig. 3b: eine alternative Elektrodenanordnung; und
- Fig. 4: eine Darstellung einer beispielhaften Beschaltung einer erfindungsgemäßen Elektrodenanordnung mit Referenzelektroden.

### Ausführungsform der Erfindung

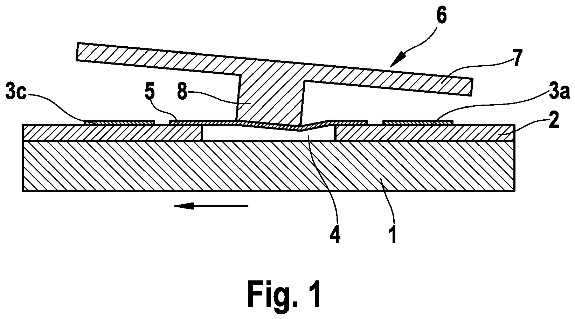

Fig.1 zeigt eine schematische Schnittdarstellung eines erfindungsgemäßen Beschleunigungssensors senkrecht zur Substratebene. Dieser umfasst ein Substrat 1, eine auf dem Substrat 1 befindliche Isolationsschicht 2, auf der vier planare Elektroden angeordnet sind, von denen in der Darstellung zwei Elektroden 3a, 3c sichtbar sind, einen ausgesparten zentralen Bereich 4 in der Isolationsschicht 2, der von einer elastischen Membran 5 überspannt wird, sowie eine seismische Masse 6, die im wesentlichen eine rotationssymmetrische ebene Platte 7 umfasst, und deren Schwerpunkt deutlich außerhalb der Ebene der elastischen Membran 5 liegt. Die elastische Membran 5 ist in ihrem Randbereich mit der Isolationsschicht 2 und damit gleichzeitig fest mit dem Substrat 1 verbunden. Der ausgesparte zentrale Bereich 4 in der Isolationsschicht 2 definiert gleichzeitig einen Flächenbereich der elastischen Membran 5, welcher senkrecht zur Substrat- bzw. Membranebene auslenkbar ist. Im zentralen Bereich der seismischen Masse 6 befindet sich ein Fuß 8, der aus der ebenen Platte 7 der seismischen Masse 6 herausragt, den Abstand des Schwerpunktes der seismischen Masse 6 zur elastischen Membran 5 festlegt und gleichzeitig das Befestigungsmittel bildet, mit dem die seismische Masse 6 an der elastischen Membran 5, und zwar in deren auslenkbarem Bereich, befestigt ist. In Fig.1 angedeutet ist gleichzeitig die beim Angreifen einer Beschleunigung in Pfeilrichtung auftretende erfindungsgemäße Verkippung der seismischen Masse 6, die zu einer Abstandsänderung zwischen einzelnen Elektroden 3a, 3c und diesen jeweils gegenüberliegenden Flächenbereichen der Platte 7 der seismischen Masse 6 führt.

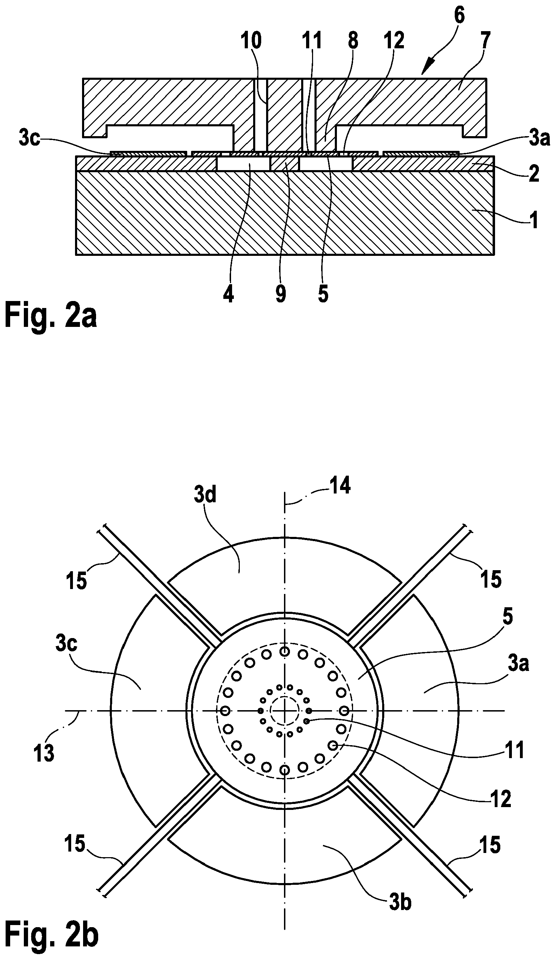

Fig. 2 zeigt eine Darstellung eines erfindungsgemäßen Beschleunigungssensors mit zentraler Abstützung der elastischen Membran 5 als Schnittdarstellung und Draufsicht. Der Sensor ist parallel zur Waferebene radialsymmetrisch ausgelegt und erfüllt dadurch in besonders vorteilhafter Weise symmetriebezogene geometrische Randbedingungen für eine mehrachsige Beschleunigungsmessung. Die dargestellte Sensorkonfiguration lässt sich ohne wesentliche Modifikationen durch übliche Prozesse der Oberflächen-Mikromechanik auf Siliziumbasis herstellen. Um zu große Unterätzweiten und Instabilitäten zu vermeiden, wurde im zentralen Bereich der elastischen Membran 5 eine Stütze 9 belassen, welche die elastische Membran 5 elektrisch isoliert auf dem Substrat 1 abstützt. Der senkrecht zur Substratebene auslenkbare Bereich der elastischen Membran 5 befindet sich entsprechend außerhalb des Bereiches der verbliebenen Stütze 9 und umgibt den durch diese Stütze 9 festgelegten Befestigungsbereich radialsymmetrisch. Die äußere Begrenzung des senkrecht zur Substratebene auslenkbaren Bereiches wird durch die Verbindung der elastischen Membran 5 mit der Isolationsschicht 2 gebildet. Auf der elastischen Membran 5 befindet sich wiederum ein Fuß 8, der aus der ebenen Platte 7 der seismischen Masse 6 herausragt, den Abstand der seismischen Masse 6 zur elastischen Membran 5 festlegt und gleichzeitig das Befestigungsmittel bildet, mit dem die seismische Masse 6 an der elastischen Membran 5 befestigt ist. Durch die ebene Platte 7 der seismischen Masse 6 und den Fuß 8 hindurch führt senkrecht zur Substratebene ein ringförmiger radialsymmetrischer Trenchgraben 10 bis zur elastischen Membran 5. Auf dem Grund des Trenchgrabens 10 weist die elastische Membran 5 Öffnungen 11 auf, die als Perforation für ein möglichst effektives Unterätzen der elastischen Membran 5 dienen. Um die angestrebte Beweglichkeit der seismischen Masse 6 zu gewährleisten, liegt der innere Rand des Trenchgrabens 10 außerhalb des äußeren Randes der verbliebenen Stütze 9. Der Trenchgraben 10 weist gleichzeitig eine Breite auf, die eine zu erwartende Maximalverkippung der seismischen Masse 6 nicht behindert. Außerhalb des Verbindungsbereiches zwischen dem Fuß 8 und der elastischen Membran 5 weist die elastische Membran 5 weitere Öffnungen 12 in Form eines weiteren perforierten Bereiches auf, über den sie mit der Isolationsschicht 2 in Verbindung steht. Durch den ringförmigen Trenchgraben 10 ergibt sich eine ringförmige Anbindung der ebenen Platte 7 über den Fuß 8 an die elastische Membran 5, wobei der verbliebene Ring des Fußes 8 schmal genug ist, um die erforderliche Unterätzung der elastischen Membran 5 zu gewährleisten, da im Kontaktbereich zwischen Fuß 8 und elastischer Membran 5 eine Perforation der Membran zum Durchätzen nicht möglich ist. Andererseits ist der Fuß 8 ausreichend stark, um durch seine Steifigkeit abzusichern, dass die Auslenkung (Verkippung) der seismischen Masse 6 nur über die Deformation der elastischen Membran 5 erfolgt. Damit die Steifigkeit der beweglichen Aufhängung der seismischen Masse 6 durch den innerhalb des Fußes 8 befindlichen Teil der elastischen Membran 5 auf dem Boden des Trenchgrabens 10 bestimmt wird, ist dieser Teil im Verhältnis zum außerhalb des Fußes 8 liegenden elastischen Membran 5 deutlich steifer ausgelegt. Da der ringförmige Trenchgraben 10 sehr genau strukturiert werden kann, ergibt sich auf diese Weise ein sicher zu definierendes elastisches Verhalten der Sensoranordnung. In der zugehörigen Draufsicht ist die Ebene der Elektroden 3a, 3b, 3c, 3d und der elastischen Membran 5 dargestellt, welche prozesstechnisch in einer sogenannten Ebene des vergrabenen Polysiliziums ausgebildet sind. Des weiteren sind zwei Symmetrieachsen 13, 14 eingezeichnet, die parallel zu den Detektionsrichtungen x und y verlaufen und sich im Mittelpunkt der Membran 5 schneiden. Die elektrische Anbindung der seismischen Masse 6 erfolgt ebenfalls über die elastisch auslenkbare Membran 5, die in ihrem Randbereich in Leiterbahnen 15 übergeht, welche zwischen den Elektroden 3a, 3b, 3c, 3d hindurchführen. Gut sichtbar sind in dieser Darstellung die Öffnungen 11, 12 der beiden perforierten Bereiche der elastischen Membran 5. Gestrichelt dargestellt sind Begrenzungen der Bereiche, unter denen sich die Stütze 9 und die Isolationsschicht 2 befinden und die gleichzeitig die Grenzen des Bereiches markieren, in denen die Membran 5 auslenkbar ist.

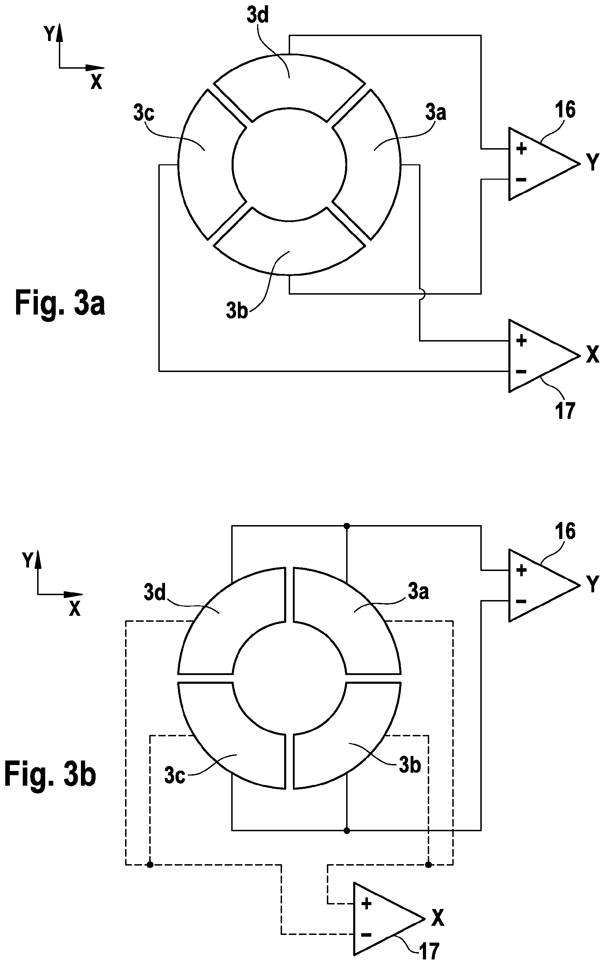

Fig. 3a zeigt eine Darstellung einer beispielhaften Beschaltung einer erfindungsgemäßen Elektrodenanordnung. Grundsätzlich sind Ausführungsformen mit runden, rechteckigen oder quadratischen seismischen Massen und zu diesen geometrisch ähnlichen Elektrodenanordnungen möglich, wobei auch eine Verwendung erfindungsgemäßer Sensoren als eindimensionale Beschleunigungssensoren möglich ist. Ein besonders hoher Symmetriegrad und damit eine besonders hohe Richtungsunabhängigkeit am Einsatzort ergibt sich jedoch bei radialsymmetrischen Elektrodenanordnungen. In den Fig. 3a und 3b sind zwei diesbezügliche Elektrodenanordnungen, die jeweils aus vier gleich großen Einzelelektroden 3a, 3b, 3c, 3d bestehen, dargestellt. Jede der Elektroden 3a, 3b, 3c, 3d umfängt das Symmetriezentrum der Elektrodenanordnung in einem Winkel von nahezu 90°. Die Elektroden 3a, 3b, 3c, 3d sind durch sternförmig verlaufende Trennbereiche von einander isoliert. Der Unterschied der beiden Anordnungen besteht in der Ausrichtung der sternförmigen Trennbereiche relativ zu den Komponenten der zu detektierenden Beschleunigung (dargestellt durch ein stilisiertes Koordinatensystem), die letztlich durch Anforderungen der jeweils verwendeten Auswerteschaltungen und -algorithmen bestimmt wird. Beim kapazitiven Auslesen der über den einzelnen Elektroden 3a, 3b, 3c, 3d im Zusammenwirken mit der seismischen Masse gebildeten Kondensatoren bieten sich die beiden Konfigurationen an, in denen die sternförmig verlaufenden Trennbereiche entweder um 45° zu den zu messenden Beschleunigungskomponenten versetzt oder parallel zu diesen Komponenten verlaufen. Im ersten Fall erfolgt eine Auswertung für die einzelnen Richtungen, indem jeweils die beiden gegenüberliegenden Kapazitäten für die Bestimmung einer Beschleunigungskomponente ausgewertet werden. Im vorliegenden Beispiel erfolgt die Bestimmung der Beschleunigung in X-Richtung unter Zuhilfenahme des Quotienten (C₃ₐ-C_{3c})/(C₃ₐ+C_{3c}) und die Bestimmung der Beschleunigung in Y-Richtung entsprechend unter Zuhilfenahme des Quotienten (C_{3b}-C_{3d})/(C_{3b}+C_{3d}) als Maß für die auftretende Beschleunigung. Die Auswertung der jeweiligen Quotienten erfolgt nach einer entsprechenden Signalverstärkung durch integrierte Auswerte- und Verstärkerschaltungen 16, 17. Im Fall parallel zu den Beschleunigungskomponenten verlaufender sternförmiger Trennbereiche zwischen den Elektroden 3a, 3b, 3c, 3d gemäß Fig. 3b müssen jeweils alle vier Kapazitäten zur Bestimmung einer Beschleunigungskomponente Berücksichtung finden, was gegebenenfalls unter zeitlich gestaffelter Auswertung der einzelnen Größen und unter Zuhilfenahme der Quotienten ((C₃ₐ+C_{3b})-(C_{3c}+C_{3d}))/(C₃ₐ+C_{3b}+C_{3c}+C_{3d}) für die Beschleunigung in X-Richtung und ((C_{3b}+C_{3c})-(C_{3d}+C₃ₐ))/(C₃ₐ+C_{3b}+C_{3c}+C_{3d}) für die Beschleunigung in Y-Richtung erfolgt. Die gestrichelt dargestellte Schaltungsvariante muss dabei zeitlich versetzt zur mit durchgehenden Leiterbahnen dargestellten Schaltungsvariante realisiert werden

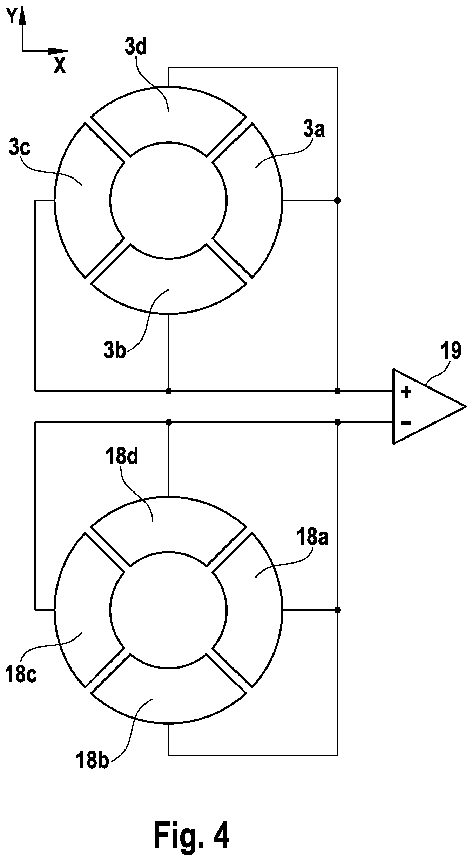

Fig. 4 zeigt eine Darstellung einer beispielhaften Beschaltung einer erfindungsgemäßen Elektrodenanordnung 3a, 3b, 3c, 3d mit Referenzelektroden 18a bis 18d. Bei Auswertung aller vier Kapazitäten ergibt sich unter Zuhilfenahme einer Referenzkapazität zusätzlich die Möglichkeit einer Bestimmung von senkrecht zur Substratebene auftretenden Beschleunigungen. Dabei kann als Referenzkapazität C_{ref} die Summe aller Kapazitäten in der Ruhelage der seismischen Masse 6 verwendet werden (C_{ref}= C_{3a,0}+C_{3b,0}+C_{3c,0}+C_{3d,0}), wobei die Auswertung der zu messenden dritten Beschleunigungskomponente unter Zuhilfenahme des Terms C₃ₐ+C_{3b}+C_{3c}+C_{3d-}C_{ref} erfolgt. Bei Verwendung gesonderter Referenzelektroden 18a bis 18d reduziert sich der schaltungstechnische Aufwand zur Auswertung und Bestimmung der Beschleunigungskomponente senkrecht zur Substratebene bei gleichzeitiger Verbesserung der Auswertequalität. Dies ist jedoch mit der Preisgabe eines Teils des Platzgewinns durch den Einsatz erfindungsgemäßer Sensoren mit einer einzelnen seismischen Masse 6 verbunden, da die Referenzelektroden 18a bis 18d geometrisch identisch zur Elektrodenanordnung 3a, 3b, 3c, 3d ausgebildet sind, jedoch seitlich versetzt außerhalb des Bereiches der seismischen Masse 6 und gegenüber einer starren Bezugfläche angeordnet werden müssen. Die Auswertung erfolgt wiederum durch eine entsprechende Auswerte- und Verstärkerschaltung 19.

## Patentansprüche

1. Mikromechanischer Beschleunigungssensor, umfassend ein Substrat (1), eine parallel zur Substratebene verlaufende elastische Membran (5), die teilweise mit dem Substrat verbunden ist und einen Flächenbereich aufweist, der senkrecht zur Substratebene ausgelenkt werden kann, eine seismische Masse (6), deren Schwerpunkt außerhalb der Ebene der elastischen Membran (5) liegt, **dadurch gekennzeichnet, dass** sich die seismische Masse (6) in einem Abstand über Substratbereiche erstreckt, die außerhalb des Bereiches der elastischen Membran (5) liegen und eine Anordnung aus mehreren Elektroden (3a, 3b, 3c, 3d) aufweisen, die jeweils mit gegenüberliegenden Bereichen der seismischen Masse (6) schaltungstechnisch einen Kondensator bilden, und wobei die seismische Masse (6) in ihrem zentralen Bereich in dem Flächenbereich der elastischen Membran (5), der senkrecht zur Substratebene ausgelenkt werden kann, an der elastischen Membran (5) befestigt ist.

2. Mikromechanischer Beschleunigungssensor nach Anspruch 1, **dadurch gekennzeichnet, dass** die seismische Masse (6) und die Überlappungsbereiche zwischen den Elektroden (3a, 3b, 3c, 3d) und den gegenüberliegenden Bereichen der seismischen Masse (6) mindestens zwei zur Substratebene parallele Symmetrieachsen (13, 14) in den Detektionsrichtungen (x, y) aufweisen.

3. Mikromechanischer Beschleunigungssensor nach einem der Anspruch 1 oder 2, **dadurch gekennzeichnet, dass** die Elektroden (3a, 3b, 3c, 3d) radialsymmetrisch um den Befestigungsbereich der seismischen Masse (6) angeordnet sind.

4. Mikromechanischer Beschleunigungssensor nach einem der Ansprüche 1 bis 3, **dadurch gekennzeichnet, dass** der Flächenbereich der elastischen Membran (5), welcher senkrecht zur Substratebene auslenkbar ist, der Flächenbereich in dem die seismische Masse (6) an der elastischen Membran (5) befestigt ist, die seismische Masse (6) und die Elektrodenanordnung jeweils mindestens zwei Symmetrieachsen parallel zur Substratebene in den Detektionsrichtungen (x, y) aufweisen, wobei die Schnittpunkte der Symmetrieachsen senkrecht zur Substratebene übereinander liegen.

5. Mikromechanischer Beschleunigungssensor nach einem der Ansprüche 1 bis 4, **dadurch gekennzeichnet, dass** vier Elektroden (3a, 3b, 3c, 3d) außerhalb der elastischen Membran (5) auf dem Substrat (1) angeordnet sind.

6. Mikromechanischer Beschleunigungssensor nach Anspruch 5, **dadurch gekennzeichnet, dass** die vier Elektroden (3a, 3b, 3c, 3d) radialsymmetrisch angeordnet sind.

7. Mikromechanischer Beschleunigungssensor nach einem der Ansprüche 1 bis 6, **dadurch gekennzeichnet, dass** die seismische Masse (6) eine parallel zum Substrat (1) verlaufende ebene Platte (7) umfasst.

8. Mikromechanischer Beschleunigungssensor nach einem der Ansprüche 1 bis 7, **dadurch gekennzeichnet, dass** die elastische Membran (5) in einem zentralen Bereich mit dem Substrat (1) verbunden ist und der Flächenbereich, in dem die elastische Membran (5) senkrecht zur Substratebene auslenkbar ist, der Flächenbereich, in dem die seismische Masse (6) an der elastischen Membran (5) befestigt ist und die parallel zum Substrat (1) verlaufende ebene Platte (7) der seismischen Masse (6) radialsymmetrisch um diesen zentralen Bereich, in dem die elastische Membran (5) mit dem Substrat (1) verbunden ist, angeordnet sind.

9. Mikromechanischer Beschleunigungssensor nach einem der Ansprüche 1 bis 8, **dadurch gekennzeichnet, dass** die seismische Masse (6) in ihrem zentralen Bereich einen ringförmigen Trenchgraben (10) aufweist, der zu einem perforiertem Bereich der elastischen Membran (5) führt.

10. Mikromechanischer Beschleunigungssensor nach einem der Ansprüche 1 bis 9, **dadurch gekennzeichnet, dass** Referenzelektroden (18a, 18b, 18c, 18d) geometrisch identisch zur Elektrodenanordnung (3a, 3b, 3c, 3d) ausgebildet und seitlich versetzt außerhalb des Bereiches der seismischen Masse (6) angeordnet sind.

## Claims

1. Micromechanical acceleration sensor, comprising a substrate (1), an elastic membrane (5), which extends parallel to the substrate plane, is partially connected to the substrate and has a surface region that can be deflected perpendicularly to the substrate plane, and a seismic mass (6), the centre of gravity of which lies outside the plane of the elastic membrane (5), **characterized in that** the seismic mass (6) extends at a distance over regions of the substrate that lie outside the region of the elastic membrane (5) and have an arrangement comprising multiple electrodes (3a, 3b, 3c, 3d), which in terms of circuitry respectively form a capacitor with opposite regions of the seismic mass (6), and the seismic mass (6) being attached in its central region to the elastic membrane (5) in the surface region of the elastic membrane (5) that can be deflected perpendicularly to the substrate plane.

2. Micromechanical acceleration sensor according to Claim 1, **characterized in that** the seismic mass (6) and the overlapping regions between the electrodes (3a, 3b, 3c, 3d) and the opposite regions of the seismic mass (6) have at least two axes of symmetry (13, 14) parallel to the substrate plane in the directions of detection (x, y).

3. Micromechanical acceleration sensor according to either of Claims 1 and 2, **characterized in that** the electrodes (3a, 3b, 3c, 3d) are arranged radially symmetrically around the attachment region of the seismic mass (6).

4. Micromechanical acceleration sensor according to one of Claims 1 to 3, **characterized in that** the surface region of the elastic membrane (5) that can be deflected perpendicularly to the substrate plane, the surface region in which the seismic mass (6) is attached to the elastic membrane (5), the seismic mass (6) and the electrode arrangement each have at least two axes of symmetry parallel to the substrate plane in the directions of detection (x, y), the points of intersection of the axes of symmetry lying one above the other perpendicularly to the substrate plane.

5. Micromechanical acceleration sensor according to one of Claims 1 to 4, **characterized in that** four electrodes (3a, 3b, 3c, 3d) are arranged outside the elastic membrane (5) on the substrate (1).

6. Micromechanical acceleration sensor according to Claim 5, **characterized in that** the four electrodes (3a, 3b, 3c, 3d) are arranged radially symmetrically.

7. Micromechanical acceleration sensor according to one of Claims 1 to 6, **characterized in that** the seismic mass (6) comprises a flat plate (7) extending parallel to the substrate (1).

8. Micromechanical acceleration sensor according to one of Claims 1 to 7, **characterized in that** the elastic membrane (5) is connected in a central region to the substrate (1) and the surface region in which the elastic membrane (5) can be deflected perpendicularly to the substrate plane, the surface region in which the seismic mass (6) is attached to the elastic membrane (5) and the flat plate (7) of the seismic mass (6) that extends parallel to the substrate (1) are arranged radially symmetrically around this central region in which the elastic membrane (5) is connected to the substrate (1).

9. Micromechanical acceleration sensor according to one of Claims 1 to 8, **characterized in that** the seismic mass (6) has in its central region an annular trench (10), which leads to a perforated region of the elastic membrane (5).

10. Micromechanical acceleration sensor according to one of Claims 1 to 9, **characterized in that** reference electrodes (18a, 18b, 18c, 18d) are formed geometrically identically to the electrode arrangement (3a, 3b, 3c, 3d) and are arranged laterally offset outside the region of the seismic mass (6).

## Revendications

1. Capteur d'accélération micromécanique, comprenant un substrat (1), une membrane élastique (5) qui s'étend parallèlement au plan du substrat, laquelle est partiellement reliée au substrat et possède une zone de surface qui peut être déviée perpendiculairement au plan du substrat, une masse sismique (6) dont le centre de gravité se trouve en-dehors du plan de la membrane élastique (5), **caractérisé en ce que** la masse sismique (6) s'étend sur une distance au-dessus de zones du substrat qui se trouvent en-dehors de la zone de la membrane élastique (5) et possèdent un arrangement de plusieurs électrodes (3a, 3b, 3c, 3d), lesquelles forment respectivement, par technique de circuit, un condensateur avec les zones opposées de la masse sismique (6), et la masse sismique (6) étant fixée à la membrane élastique (5) dans sa zone centrale dans la zone de la surface de la membrane élastique (5) qui peut être déviée perpendiculairement au plan du substrat.

2. Capteur d'accélération micromécanique selon la revendication 1, **caractérisé en ce que** la masse sismique (6) et les zones de chevauchement entre les électrodes (3a, 3b, 3c, 3d) et les zones opposées de la masse sismique (6) possèdent au moins deux axes de symétrie (13, 14) parallèles au plan du substrat dans les directions de détection (x, y).

3. Capteur d'accélération micromécanique selon l'une des revendications 1 ou 2, **caractérisé en ce que** les électrodes (3a, 3b, 3c, 3d) sont disposées avec symétrie radiale autour de la zone de fixation de la masse sismique (6).

4. Capteur d'accélération micromécanique selon l'une des revendications 1 à 3, **caractérisé en ce que** la zone de surface de la membrane élastique (5) qui peut être déviée perpendiculairement au plan du substrat est la zone de surface dans laquelle la masse sismique (6) peut être fixée à la membrane élastique (5), la masse sismique (6) et l'arrangement d'électrode possédant respectivement au moins deux axes de symétrie parallèles au plan du substrat dans les directions de détection (x, y), les points d'intersection des axes de symétrie se trouvant l'un au-dessus de l'autre perpendiculairement au plan du substrat.

5. Capteur d'accélération micromécanique selon l'une des revendications 1 à 4, **caractérisé en ce que** quatre électrodes (3a, 3b, 3c, 3d) sont disposées sur le substrat (1) en-dehors de la membrane élastique (5).

6. Capteur d'accélération micromécanique selon la revendication 5, **caractérisé en ce que** les quatre électrodes (3a, 3b, 3c, 3d) sont disposées avec symétrie radiale.

7. Capteur d'accélération micromécanique selon l'une des revendications 1 à 6, **caractérisé en ce que** la masse sismique (6) comprend une plaque (7) plane qui s'étend parallèlement au substrat (1).

8. Capteur d'accélération micromécanique selon l'une des revendications 1 à 7, **caractérisé en ce que** la membrane élastique (5) est reliée au substrat (1) dans une zone centrale et la zone de surface dans laquelle la membrane élastique (5) peut être déviée perpendiculairement au plan du substrat est la zone de surface dans laquelle la masse sismique (6) est fixée à la membrane élastique (5) et la plaque (7) plane de la masse sismique (6) qui s'étend parallèlement au substrat (1) est disposée avec symétrie radiale autour de la zone centrale dans laquelle la membrane élastique (5) est reliée au substrat (1).

9. Capteur d'accélération micromécanique selon l'une des revendications 1 à 8, **caractérisé en ce que** la masse sismique (6) possède dans sa zone centrale une tranchée (10) de forme annulaire qui mène à une zone perforée de la membrane élastique (5).

10. Capteur d'accélération micromécanique selon l'une des revendications 1 à 9, **caractérisé en ce que** des électrodes de référence (18a, 18b, 18c, 18d) sont configurées géométriquement à l'identique de l'arrangement d'électrodes (3a, 3b, 3c, 3d) et sont disposées avec un décalage latéral en-dehors de la zone de la masse sismique (6).
